(19) Europäisches Patentamt
European Patent Office
Office européen des brevets

(11) Veröffentlichungsnummer : **0 120 272**
**B1**

(12) # EUROPÄISCHE PATENTSCHRIFT

(45) Veröffentlichungstag der Patentschrift : **12.11.86**

(51) Int. Cl.[4] : **C 08 L 67/06**, C 08 F299/04, C 08 K 5/29, C 08 K 5/00

(21) Anmeldenummer : **84101654.6**

(22) Anmeldetag : **17.02.84**

(54) **Härtbare Polyesterformmasse.**

(30) Priorität : **25.02.83 DE 3306641**

(43) Veröffentlichungstag der Anmeldung : **03.10.84 Patentblatt 84/40**

(45) Bekanntmachung des Hinweises auf die Patenterteilung : **12.11.86 Patentblatt 86/46**

(84) Benannte Vertragsstaaten : **BE DE FR GB IT NL SE**

(56) Entgegenhaltungen :
**DE-B- 2 337 332**
**FR-A- 2 197 919**
**Chemical Abstracts Band 85, Nr. 8, 23. August 1976, Columbus, Ohio, USA Seite47, Spalte 1, Abstract Nr. 47692x**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Hesse, Anton, Dr.**
**Peter-Nickel-Strasse 15**
**D-6940 Weinheim (DE)**
Erfinder : **Bruder, Horst, Dr.**
**Dubliner Strasse 25**
**D-6700 Ludwigshafen (DE)**
Erfinder : **Lawonn, Horst**
**Stettiner Strasse 6**
**D-6703 Limburgerhof (DE)**

**EP 0 120 272 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft warmhärtbare ungesättigte Polyesterformmassen, die ungesättigte Polyester, copolymerisierbare Monomere, schrumpfmindernde Polymere, Verstärkungsfasern, Eindickmittel, ein Peroxid und eine Cobaltverbindung enthalten. Es handelt sich dabei um Halbzeugmassen die flächig oder teigförmig vorliegen, d. h. als sheet moulding compounds (SMC) oder bulk moulding compounds (BMC). Ihre Herstellung und Verarbeitung ist z. B. beschrieben in der Monographie von P. F. Bruins, « Unsaturated Polyester Technology », Gordon and Breach Science Publishers 1976, Seiten 211 bis 238.

Bei der Aushärtung derartiger Formmassen tritt ein Schrumpfen ein, das bekanntlich durch den Zusatz von schrumpfmindernden Polymerisaten, sogenannten « LP » (low profile)-Komponenten, weitgehend verhindert werden kann. Man erhält Formkörper, die recht glatte Oberflächen haben und keine Sinkmarken gegenüber Verstärkungsrippen aufweisen. Sie zeigen jedoch immer noch eine Langwelligkeit der Oberfläche, die beim Aufspielgeln eines Rasters am welligen Verlauf der Schattenlinien zu erkennen ist, sowie ein Durchscheinen der Faserstruktur. Bei großflächigen Formteilen, insbesondere bei Kraftfahrzeug-Sichtteilen, sind diese Erscheinungen äußert störend. Neben der Beseitigung dieser Nachteile war es ein weiteres Ziel der Erfindung, die Härtungszeit bei der Warmhärtung zu verkürzen, ohne daß dabei aber eine wesentliche Verschlechterung der Lagerbeständigkeit der Formmassen eintritt, d. h. eine Kalthärtung bei Temperaturen unterhalb von etwa 50 °C darf nicht auftreten. Außerdem sollte der Oberflächenglanz der ausgehärteten Formkörper verbessert werden.

Diese Ziele werden durch die erfindungsgemäßen Formmassen erreicht. Diese enthalten :

A. ethylenisch ungesättigte Polyester,
B. ethylenisch ungesättigte, mit A copolymerisierbare Monomere,
C. 1 bis 30 Gew.% schrumpfmindernder und/oder elastifizierender organischer Polymerer,
D. 5 bis 300 Gew.%, bezogen auf A + B, faserförmiger Verstärkungsmittel,
E. gegebenenfalls pulverförmige Füllstoffe,
F. gegebenenfalls 0,5 bis 5 Gew.%, bezogen auf A + B, Eindickmittel,
G. 0,05 bis 5 Gew.%, bezogen auf A + B, organische Peroxide,
H. Cobaltverbindungen und
I. gegebenenfalls weitere übliche Zusatzstoffe.

Erfindungsgemäß werden als Cobaltverbindungen planare Chelatkomplexe des II-wertigen Cobalts mit einem vierzähnigen Liganden, bei dem mindestens 2 Bindungen von einem Stickstoffatom ausgehen, in einer Menge von 5 bis 300 ppm Co, bezogen auf A + B, eingesetzt.

In der DE-A-26 34 042 ist die Verwendung von Cobalt-Chelatkomplexen, die zusätzlich Aminliganden als Elektronendonatoren enthalten, als Beschleuniger für die Kalthärtung von ungesättigten Polyesterformmassen beschrieben. Diese Cobaltverbindungen beschleunigen zwar auch die Warmhärtung, sie können jedoch bei SMC- und BMC-Formmassen nicht eingesetzt werden, da sie die Lagerstabilität drastisch herabsetzen. Dasselbe trifft auch zu auf die in der US-A-3 398 213 beschriebenen Cobalt-Komplexe, z. B. mit Ethylendiamintetraessigsäure, sowie auf die in der DE-B-1 005 267 beschriebenen Cobalt-Komplexe mit β-Diketonen und β-Ketocarbonsäureestern zu.

In der DE-B-23 37 332 sind ungesättigte Polyesterharzmassen beschrieben, die bei Zimmertemperatur zu Formkörpern oder Überzügen aushärtbar sind. Die Harze enthalten als Härter Hydroperoxide und als Härtungsbeschleuniger u. a. planare Cobalt-II-Chelatkomplexe mit vierzähnigen Liganden. Da die dort beschriebenen Härtungssysteme eine Kalthärtung bewirken, sind die Polyesterharzmassen nicht lagerstabil und sind folglich auch nicht als SMC- oder BMC-Massen geeignet. Die Cobalt-Komplexe nach der DE-B-23 37 332 bewirken ein günstiges Trockenverhalten, bei dem eine Gel- oder Hautbildung an der Oberfläche des Harzes vermieden wird. Dieses Problem spielt aber nur bei der Trocknung von Lackfilmen an der Luft eine Rolle. Die Druckschrift kann daher keinen Hinweis geben für die Lösung der Aufgabe, bei der Warmhärtung von Verstärkungsfasern enthaltenden Polyesterformmassen durch Verpressen in Formen, d. h. bei Luftausschluß, eine Langwelligkeit der Formteiloberfläche und ein Durchscheinen der Faserstruktur zu vermeiden.

In der FR-A-21 97 919 sind Formmassen beschrieben, die einen ungesättigten Polyester, Monomere, ein schrumpfminderndes Polymeres, Verstärkungsfasern, Eindickmittel, Peroxide und Komplexverbindungen des Cobalts mit Triethylendiamin enthalten Diese Cobaltkomplexe mit zweizähnigen Liganden wirken als Härtungsbeschleuniger, sie sind jedoch nicht geeignet, die Langwelligkeit der Oberfläche und ein Durchscheinen der Faserstruktur bei ausgehärteten Formteilen zu vermeiden.

Zu den einzelnen Komponenten der Polyesterformmassen ist folgendes zu sagen :

A. Als ungesättigte Polyester eignen sich die üblichen Polykondensationsprodukte aus mehrwertigen, insbesondere zweiwertigen Carbonsäuren und deren veresterbaren Derivaten, insbesondere Anhydriden, die mit mehrwertigen, insbesondere zweiwertigen Alkoholen esterartig verknüpft sind, und gegebenenfalls zusätzlich Reste einwertiger Carbonsäuren und/oder Reste einwertiger Alkohole und/oder Reste von Hydroxycarbonsäuren enthalten, wobei zumindest ein Teil der Reste über ethylenisch ungesättigte copolymerisierbare Gruppen verfügen muß.

Als mehrwertige, insbesondere zweiwertige, gegebenenfalls ungesättigte Alkohole eignen sich die üblichen acyclische oder cyclische Gruppen aufweisenden Alkandiole und Oxaalkandiole, wie z. B.

Ethylenglykol, Propylenglykol-1,2, Propandiol-1,3, Butandiol-1,3, Butandiol-1,4, Hexandiol-1,6, 2,2-Dimethylpropandiol-1,3, Diethylenglykol, Triethylenglykol, Polyethylenglykol, Dipropylenglykol, Cyclohexandiol-1,2, 2,2-Bis-(hydroxy-cyclohexyl)-propan, Trimethylolpropanmonoallylether oder Butendiol-1,4. Ferner können ein-, drei- oder höherwertige Alkohole, wie z. B. Ethylhexanol, Fettalkohole, Benzylalkohole, 1,2-Di-(allyloxy)-propanol-(3), Glycerin, Pentaerythrit oder Trimethylolpropan in untergeordneten Mengen mitverwendet werden. Die mehrwertigen, insbesondere zweiwertigen Alkohole werden im allgemeinen in stöchiometrischen Mengen mit mehrbasischen, insbesondere zweibasischen Carbonsäuren bzw. deren kondensierbaren Derivaten umgesetzt.

Geeignete Carbonsäuren bzw. deren Derivate sind zweibasische, olefinisch ungesättigte, vorzugsweise α,β-olefinisch ungesättigte Carbonsäuren, wie z. B. Maleinsäure, Fumarsäure, Chlormaleinsäure, Itaconsäure, Methylenglutarsäure und Mesaconsäure bzw. deren Ester oder vorzugsweise deren Anhydride. In die Polyester können weiterhin zusätzlich andere modifizierend wirkende zweibasische, ungesättigte und/oder gesättigte, sowie aromatische Carbonsäuren, wie z. B. Bernsteinsäure, Glutarsäure, Methylglutarsäure, Adipinsäure, Sebacinsäure, Pimelinsäure, Phthalsäureanhydrid, o-Phthalsäure, Isophthalsäure, Terephthalsäure, Dihydrophthalsäure, Tetrahydrophthalsäure, Tetrachlorphthalsäure, 3,6-Endomethylen-1,2,3,6-tetrahydrophthalsäure, Endomethylentetrachlorphthalsäure oder Hexachlorendomethylentetrahydrophthalsäure einkondensiert sein, ferner ein-, drei- und höherbasische Carbonsäuren, wie z. B. Ethylhexansäure, Fettsäuren, Methacrylsäure, Acrylsäure, Propionsäure, 1,2,4,5-Benzoltetracarbonsäure. Vorzugsweise verwendet werden Maleinsäure bzw. deren Anhydrid und Fumarsäure.

Auch ungesättigte Polyester, die unter Verwendung von Dicyclopentadien hergestellt wurden, lassen sich vorteilhaft einsetzen.

Gemische ungesättigter Polyester, darunter auch solche, die in den Monomeren B. nur beschränkt löslich sind und leicht kristallisieren, können ebenfalls eingesetzt werden. Solche leicht kristallisierende ungesättigte Polyester können z. B. aus Fumarsäure, Adipinsäure, Terephthalsäure, Ethylenglykol, Butandiol-1,4, Hexandiol-1,6 und Neopentylglykol aufgebaut sein.

Die ungesättigten Polyester besitzen Säurezahlen von 5 bis 200, vorzugsweise von 20 bis 85 und mittlere Molekulargewichte von ungefähr 800 bis 6 000, vorzugsweise von etwa 1 000 bis 4 000.

Die amorphen und gegebenenfalls kristallisierbaren ungesättigten Polyester werden im allgemeinen durch Schmelzkondensation oder Kondensation unter azeotropen Bedingungen aus ihren Ausgangskomponenten nach kontinuierlichen oder diskontinuierlichen Verfahren hergestellt.

B. Als copolymerisierbare, ethylenisch ungesättigte monomere Verbindungen kommen die üblicherweise zum Herstellen ungesättigter Polyesterformmassen verwendeten Allyl- und vorzugsweise Vinylverbindungen in Frage, z. B. Vinylaromaten, wie Styrol, α-Methylstyrol, p-Chlorstyrol oder Vinyltoluol ; Ester der Acrylsäure und Methacrylsäure mit 1 bis 18 Kohlenstoffatome enthaltenden Alkoholen, wie Methacrylsäuremethylester, Acrylsäurebutylester, Ethylhexylacrylat, Hydroxypropylacrylat, Dihydrodicyclopentadienylacrylat, Butandioldiacrylat und (Meth)-acrylsäureamide ; Allylester, wie Diallylphthalat, und Vinylester, wie Ethylhexansäurevinylester, Vinylacetat, Vinylpropionat, Vinylpivalat und andere. Desgleichen eignen sich Gemische der genannten olefinisch ungesättigten Monomeren. Bevorzugt geeignet als Komponente B sind Styrol, Vinyltoluol und Diallylphthalat. Die Monomeren B sind in den Polyesterformmassen im allgemeinen in einer Menge von 10 bis 80, vorzugsweise von 20 bis 70 Gew.%, bezogen auf das Gesamtgewicht der Komponenten A und B enthalten.

C. Als schrumpfmindernde Zusätze kommen Polymerisate, wie z. B. Polystyrol, Polymethylmethacrylat, Polyvinylacetat, Polyethylen, Polybutadien, Polyisopren, Celluloseester, Polyvinylchlorid und entsprechende Copolymere und Pfropfcopolymere, wie z. B. schlagzähes Polystyrol in Frage. Sie werden vorzugsweise als 30 bis 40 gew.%ige Lösungen in Monomeren B eingesetzt. Es eignen sich auch Kondensationspolymere, wie gesättigte Polyester oder Polyesterurethane, die in der Komponente A löslich sind und bei der Warmhärtung eine disperse Phase bilden. Die schrumpfmindernden Zusätze werden in Mengen von 1 bis 30 Gew.%, vorzugsweise 3 bis 20 Gew.%, bezogen auf A + B, eingesetzt. Als elastifizierende Zusätze, die zusätzlich auch schrumpfmindernd wirken, eignen sich kautschukartige Blockcopolymere, insbesondere solche aus 40 bis 95 Gew.% eines Diolefins, z. B. Butadien, Isopren oder Chloropren, und 60 bis 5 Gew.% eines Vinylaromaten, z. B. Styrol oder α-Methylstyrol. Sie werden durch anionische Polymerisation, z. B. mit lithium- oder natriumorganischen Verbindungen, hergestellt und weisen eine blockartige Struktur auf. Die Blöcke können je nach Herstellverfahren scharfe oder verschmierte Übergänge haben. Die einzelnen Blöcke können nur aus einem einzigen Monomeren bestehen, es können aber auch zwei Monomere in einem Block in unregelmäßiger Verteillung copolymerisiert vorliegen. Das Blockcopolymere kann aus zwei, drei, vier oder noch mehr Einzelblöcken bestehen. Zur Erzielung besonderer Effekte kann des Blockcopolymere Carboxylgruppen enthalten. Das Molekulargewicht der Blockcopolymeren liegt zwischen 20 000 und 200 000, vorzugsweise zwischen 50 000 und 150 000. Sie sind in den Formmassen in Mengen von 0 bis 25, vorzugsweise von 8 bis 20 Gew.%, bezogen auf A + B, enthalten.

D. Als Verstärkungsfasern kommen in Frage anorganische oder organische Fasern als Rovings oder flächige, gegebenenfalls daraus gewebte Gebilde, wie Matten, z. B. aus Glas, Kohlenstoff, Asbest, Cellulose und synthetischen organischen Fasern, wie Polycarbonsäureester, Polycarbonate und Polyamide.

Die Verstärkungsfasern werden in Mengen von 5 bis 300, vorzugsweise 10 bis 150 Gew.%, bezogen auf die Komponenten A + B, verwendet.

E. Geeignete Füllstoffe sind z. B. übliche feinpulverige oder körnige anorganische Füllstoffe, wie Kreide, Kaolin, Quarzmehl, Dolomit, Schwerspat, Metallpulver, Aluminiumoxidhydrat, Zement, Talkum, Kieselgur, Holzmehl, Holzspäne und Pigmente. Sie werden bei SMC-Formmassen in Mengen von 0 bis 200 Gew.%, bei BMC-Formmassen in Mengen von 100 bis 400 Gew.%, bezogen auf A + B, eingesetzt.

F. Als Verdickungsmittel seien beispielsweise Erdalkalioxide oder -hydroxide, wie Calciumoxid, Calciumhydroxid, Magnesiumhydroxid und vorzugsweise Magnesiumoxid sowie Gemische dieser Oxide bzw. Hydroxide genannt. Diese können auch teilweise durch Zinkoxid ersetzt sein. Auch Polyisocyanate oder Metallalkoholate sind in manchen Fällen geeignet. Die Verdickungsmittel werden den Formmassen in Mengen von 0,5 bis 5 Gew.%, bezogen auf A + B, zugesetzt. Bei hochgefüllten BMC-Formmassen kann auf eine Eindickung verzichtet werden.

G. Als Polymerisationsinitiatoren werden übliche, in der Wärme Radikale bildende organische Peroxide in Mengen von 0,05 bis 5 Gew.%, vorzugsweise von 0,1 bis 3 Gew.%, bezogen auf das Gesamtgewicht der Komponenten A und B, eingesetzt. Geeignete Initiatoren sind z. B. : Benzoylperoxid, tert.-Butylperoctoat, tert.-Butylperbenzoat, Dicumylperoxid, Di-tert.-Butylperoxid und Perketale, wie z. B. Trimethylcyclohexanonperketal, sowie Percarbonate. Hydroperoxide sind nicht geeignet. Vorzugsweise sollen die Peroxide eine Halbwertszeit bei 80 °C von mehr als 5 h, insbesondere von mehr als 50 h haben. Reaktive Peroxide, z. B. tert.-Butylperoctoat können zusätzlich in untergeordneten Mengen anwesend sein.

I. Weitere übliche Zusatzstoffe sind z. B. Inhibitoren, wie Hydrochinon, 2,6-Dimethylhydrochinon, tert.-Butylbrenzkatechin, p-Benzochinon, Chloranil, 2,6-Dimethylchinon, Nitrobenzole, wie m-Dinitrobenzol, Thiodiphenylamin oder Salze von N-Nitroso-N-cyclohexylhydroxylamin sowie deren Gemische. Die Inhibitoren sind in den Formmassen im allgemeinen in einer Menge von 0,005 bis 0,2, vorzugsweise 0,01 bis 0,1 Gew.%, bezogen auf die Komponenten A + B, enthalten.

Als Gleitmittel kommen beispielsweise Zink-, Magnesium- und Calciumstearat sowie Polyalkylenetherwachse in Betracht.

Die erfindungsgemäßen Cobalt-II-Chelat Komplexe enthalten einen vierzähnigen Liganden mit mindestens 2 Stickstoffatomen im Molekül. Sie weisen planare Struktur auf. Derartige Komplexe sind z. B. beschrieben in : F. P. Dwyer und D. P. Mellor, « Chelating agents and metal chelates », Academic Press, New York and London, 1964 ; M. Calcvin und C. H. Barkelew, J. Amer. Chem. Soc. *68*, 2267 (1946) ; R. H. Holm, G. W. Everett und A. Chakravorty, Progress Inorg. Chem. *7*, 83 (1966) ; L. F. Lindoy und D. H. Busch, Preparative Inorg. Reactions, Vol. 6 (1971) F4P ; S. C. Tang, S. Koch, G. N. Weinsteins, R. W. Lane und R. H. Holm, Inorg. Chem. Vol. 12 (Nr 11), 2589 (1973) ; sowie in Chemical Reviews 1979, Vol. 79, Nr. 2, Seite 147.

Bevorzugte Chelatkomplexes sind solche der Formel I

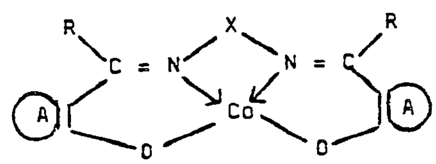

(I)

wobei

X eine Alkylen-, Cycloalkylen- oder Phenylen-Brücke ist, die gegebenenfalls Heteroatome enthalten kann,

R Wasserstoff oder Alkyl bedeutet, und

A ein aromatisches, cycloaliphatisches oder heterocyclisches Ringsystem darstellt.

Ferner sind Tetraazaannulene nach Preparative inorganic Reactions, Vol. 6, 1971, geeignet.

Besonders bevorzugte Cobaltchelatkomplexe sind :

| | |
|---|---|
| Salicylaldehyd-ethylendiimin-cobalt-(II) (« Salcomin ») | (H1) |
| Salicylaldehyd-propylen-1,2-diimin-cobalt-(II) | (H2) |
| Salicylaldehyd-o-phenylendiimin-cobalt-(II) | (H3) |
| Salicylaldehyd-propylen-1,3-diimin-cobalt-(II) | (H4) |

Die Konzentration der Cobaltchelatkomplexe wird so bemessen, daß der Cobaltgehalt, bezogen auf das Gewicht von A + B, 5 bis 300 ppm, vorzugsweise 30 bis 150 ppm, beträgt.

Zur Einarbeitung der Cobaltchelatkomplexe in die Formmassen empfiehlt es sich, den Komplex, vorzugsweise zusammen mit einem inhibitor, in Monomeren B bei 60 bis 95 °C bis zur Auflösung einzurühren. Es ist grundsätzlich auch möglich, den Cobaltchelatkomplex *in situ* zu bilden, indem man eine gewöhnliche Cobaltverbindung, z. B. Cobaltoctoat, zusammen mit dem Komplexbilder im Monomeren B auflöst. Man kann zusätzlich zu dem erfindungsgemäßen Cobaltchelatkomplex noch herkömmliche Härtungsbeschleuniger zusetzen, wie z. B. Oktoate oder Naphthenate von Kupfer, Blei, Calcium, Magnesium, Cer und insbesondere von Mangan ; ferner aromatische Amine, wie Dimethylanilin oder

Diethylanilin. Wesentlich ist jedoch, daß auch diese Härtungsbeschleuniger keine Kalthärtung auslösen, d. h., daß die eingedickten Formmassen bei Raumtemperatur bei einer Lagerung von mindestens zwei Monaten nicht gelieren.

Ein bevorzugtes Verfahren zur Herstellung der erfindungsgemäßen Formmassen besteht darin, daß man zunächst eine Lösung aus dem ungesättigten Polyester A in den Monomeren B herstellt, die außerdem das Polymere C, Eindickmittel F, Peroxid G, Cobaltkomplex H und gegebenenfalls Füllstoffe E und weitere Zusatzstoffe I enthält, und mit diesem flüssigen Gemisch die Verstärkungsfasern D tränkt. Das Eindicken des Harzgemisches geschieht durch polymeranaloge Umsetzungen des Eindickmittels mit den Endgruppen des ungesättigten Polyesters, wobei der Viskositätsanstieg durch Molekulargewichtsvergrößerung verursacht wird. Das Eindicken kann bei Raumtemperatur erfolgen, es dauert dann im allgemeinen einige Tage. Durch Erhöhen der Temperatur kann es beschleunigt werden. Bevorzugt wird dann bei Temperaturen zwischen 50 und 80 °C 2 bis 10 min lang eingedickt. Bei dem Eindickprozeß entstehen klebfreie und lagerfähige Halbzeuge, die je nach Art und Menge der Eindickmittel, Füllstoffe bzw. Verstärkungsmaterialien pastenförmige, lederartige oder steife Konsistenz haben. Die Halbzeuge können flächig (SMC-Formmassen) oder teigig (BMC-Formmassen) sein. Sie können mit Hilfe einer Presse unter einem Druck von 0,4 bis 15 $N \cdot mm^{-2}$ bei Temperaturen von 80 bis 180 °C, vorzugsweise zwischen 120 und 160 °C zu Formteilen verarbeitet werden. So lassen sich z. B. auf dem Kraftfahrzeugsektor Karosserieteile, wie Motorhauben, Heckklappen und Schiebedächer oder Stoßfänger herstellen, oder auf dem Möbelsektor Stühle, Heizgehäuse oder Schalen. Derartige Produkte zeichnen sich gegenüber Metallen durch leichteres Gewicht, hohe Festigkeit in Bezug auf das Gewicht, gute Korrosionsbeständigkeit und eine Flexibilität in der Gestaltung der Teile aus.

Die in den Beispielen genannten Teile und Prozente beziehen sich auf das Gewicht.

Herstellung der Polyesterharzlösungen

A1 : Ein ungesättigter Polyester mit Säurezahl 31 wurde hergestellt durch Umsetzung von Maleinsäureanhydrid und Propylenglykol-1,2 im Molverhältnis 1 : 1. Er wurde 65 %ig in Styrol gelöst und mit 120 ppm Hydrochinon stabilisiert.

A2 : Ein ungesättigter Polyester mit Säurezahl 35 wurde hergestellt durch Umsetzung von Maleinsäureanhydrid, Propylenglykol-1,2 und Dipropylenglykol im Molverhältnis 1 : 0,76 : 0,33. Er wurde 70 %ig in Styrol gelöst und mit 100 ppm Hydrochinon stabilisiert.

Polymerlösungen

C1 : 33 %ige styrolische Lösung von Polyvinylacetat mit Carboxylgruppen (Säurezahl 7), die mit 100 ppm Hydrochinon und 1 200 ppm 2,6-Dimethylchinon stabilisiert ist.

C2 : 36 %ige styrolische Lösung von Polymethylmethacrylat mit Carboxylgruppen (Säurezahl 6), die mit 100 ppm Hydrochinon und mit 1 200 ppm 2,6-Dimethylchinon stabilisiert ist.

C3 : 33 %ige styrolische Lösung von schlagfestem Polystyrol (6 % Polybutadien), die mit 100 ppm Hydrochinon und 1 200 ppm 2,6-Dimethylchinon stabilisiert ist.

Herstellung der Cobaltkomplexe

51,2 g (0,42 Mol) Salicylaldehyd werden in 800 ml Ethanol gelöst. Man gibt
49,8 g (0,2 Mol) Cobaltacetat hinzu und erhitzt 30 min unter Rückfluß. Dann tropft man
12,0 g (0,2 Mol) Ethylendiamin gelöst in 100 ml Ethanol zu. Nach zweistündigem Erhitzen am Rückfluß wird mit 1,5 l Wasser verdünnt. Man saugt ab, wäscht mit Ethanol, trocknet bei 60 °C im Vakuum und erhält
46 g Co-Komplex H1.

In ähnlicher Weise werden die Cobaltkomplexe H2 bis H4 hergestellt. Die Cobaltkomplexe werden bei 80 bis 90 °C den Harzmischungen zugefügt.

Beispiele

Die Harzmischungen werden hergestellt durch intensives Vermischen von 60 Teilen Polyesterharzlösung $A_1$ bzw. $A_2$, 40 Teilen Polymerlösung $C_1$, $C_2$ bzw. $C_3$, 3 Teilen Magnesiumhydroxid, 3 Teilen tert.-Butylperbenzoat (50 %ig in Weichmacher), 150 Teilen Kreide, 4,5 Teilen Zinkstearat und verschiedenen Mengen Cobalt-Komplex H.

Mit diesen Harzmischungen wurden 96 Teile einer Glasfasermatte aus geschnittenen, etwa 2,6 cm langen Rovings getränkt und zum Eindicken 14 Tage bei 23 °C zwischen Polyethylenfolien gelagert.

Die eingedickten Formmassen wurden nach Entfernung der Abdeckfolien in einem polierten Stahlwerkzeug 3 min bei 145 °C mit einem Druck von 7,45 $N \cdot mm^{-2}$ verpreßt. Die erhaltenen Formteile zeigten einen guten Oberflächenglanz und gute Faserabdeckung. Die Oberfläche wies keine Welligkeit auf und hatte keine Einfallstellen gegenüber den Verstärkungsrippen.

Tabelle

| Beispiel | Harzlösung | Polymerlösung | Co-Komplex | Teile |
|---|---|---|---|---|
| 1 | A 1 | C 1 | H 1 | 0,0276 |
| 2 | A 1 | C 2 | H 1 | 0,0276 |
| 3 | A 1 | C 1 | H 2 | 0,0574 |
| 4 | A 1 | C 1 | H 3 | 0,0631 |
| 5 | A 1 | C 1 | H 4 | 0,0574 |
| 6 | A 2 | C 3 | H 1 | 0,0276 |
| 7 | A 1 | C 1 | - | |

Im Vergleichsbeispiel 7 wurde ohne Zusatz des Cobaltkomplexes gearbeitet. Die erhaltenen Formteile zeigten eine deutliche Welligkeit und eine sichtbare Faserstruktur an der Oberfläche. Außerdem waren Sinkmarken an der Oberfläche erkennbar.

**Patentansprüche**

1. Härtbare ungesättigte Polyesterformmassen, enthaltend
A. ethylenisch ungesättigte Polyester,
B. ethylenisch ungesättigte, mit A copolymerisierbare Monomere,
C. 1 bis 30 Gew.-% schrumpfmindernder und/oder elastifizierender organischer Polymerer,
D. 5 bis 300 Gew.-%, bezogen auf A + B, faserförmiger Verstärkungsmittel,
E. gegebenenfalls pulverförmige Füllstoffe,
F. gegebenenfalls 0,5 bis 5 Gew.-%, bezogen auf A + B, Eindickmittel,
G. 0,05 bis 5 Gew.-%, bezogen auf A + B, organische Peroxide, mit Ausnahme von Hydroperoxiden
H. Cobaltverbindungen,
I. gegebenenfalls weitere übliche Zusatzstoffe,
dadurch gekennzeichnet, daß als Komponente H planare Cobalt-II-Chelatkomplexe mit einem vierzähnigen Liganden, bei dem mindestens 2 Bindungen von einem Stickstoffatom ausgehen, in einer Menge von 5 bis 300 ppm Co, bezogen auf das Gewicht von A + B, eingesetzt werden.

2. Formmassen nach Anspruch 1, dadurch gekennzeichnet, daß die Cobaltkomplexe folgende Strukturformel haben :

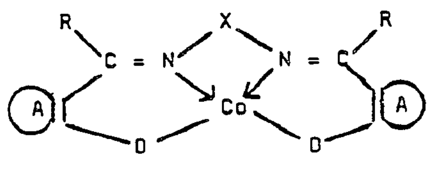

(I)

wobei
X eine Alkylen-, Cycloalkylen- oder Phenylen-Brücke ist, die gegebenenfalls Heteroatome enthalten kann,
R Wasserstoff oder Alkyl bedeutet, und
A ein aromatisches, cycloaliphatisches oder heterocyclisches Ringsystem darstellt.

3. Formmassen nach Anspruch 1, dadurch gekennzeichnet, daß als Peroxide G Benzoylperoxid, tert.-Butylperoctoat, tert.-Butylperbenzoat, Dicumylperoxid, Di-tert.-Butylperoxid, Perketale oder Percarbonate eingesetzt werden.

**Claims**

1. A curable unsaturated polyester molding material containing
A. ethylenically unsaturated polyesters,
B. ethylenically unsaturated monomers which are copolymerizable with A,
C. from 1 to 30 % by weight of shrinkage-reducing and/or elastifying organic polymers,
D. from 5 to 300 % by weight, based on A + B, of fibrous reinforcing agents,
E. if required, pulverulent fillers,
F. if required, from 0.5 to 5 % by weight, based on A + B, of thickeners,
G. from 0.05 to 5 % by weight, based on A + B, of organic peroxides,
H. cobalt compounds, and
I. if required, other conventional additives,

wherein a planar cobalt (II) chelate complex containing a tetradentate ligand in which 2 or more bonds are associated with a nitrogen atom is employed, as component H, in an amount corresponding to 5-300 ppm, based on the weight of A + B, of Co.

2. A molding material as claimed in claim 1, wherein the cobalt complex has the following structural formula :

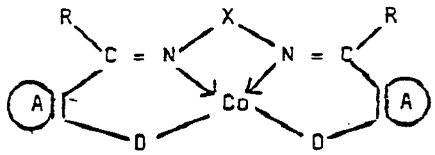

(I)

where

X is an alkylene, cycloalkylene or phenylene bridge which may or may not contain heteroatoms,

R is hydrogen or alkyl, and

A is an aromatic, cycloaliphatic or heterocyclic ring system.

3. A molding material as claimed in claim 1, wherein benzoyl peroxide, tert.-butyl peroctoate, tert.-butyl perbenzoate, dicumyl peroxide, di-tert.-butyl peroxide, perketals or percarbonates are used as peroxides G.

**Revendications**

1. Matières à mouler en polyesters insaturés, durcissables contenant

A. des polyesters insaturés éthyléniquement,

B. des monomères éthyléniquement insaturés copolymérisables avec A,

C. 1 à 30 % en poids de polymères organiques réduisant le retrait et/ou élastifiant,

D. 5 à 300 % en poids, rapportés à A + B, d'agents de renforcement en forme de fibres,

E. éventuellement des charges pulvérulentes,

F. éventuellement 0,5 à 5 % en poids, rapportés à A + B, d'épaississeur,

G. 0,05 à 5 % en poids, rapportés à A + B, de peroxydes organiques, à l'exclusion des hydroperoxydes,

H. des dérivés du cobalt,

I. éventuellement d'autres additifs usuels,

caractérisées par le fait que l'on utilise, comme composants H, en quantités de 5 à 300 ppm Co, rapportées au poids de A + B, des complexes chélatés de cobalt-II planaires à coordinat quadridenté, pour lequel au moins 2 liaisons partent d'un atome d'azote.

2. Matières à mouler selon la revendication 1, caractérisées par le fait que les complexes de cobalt ont la formule structurelle suivante :

RESERVE 5 QG

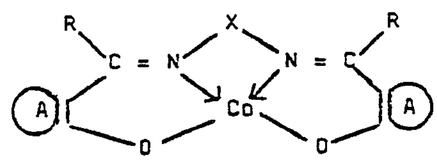

(I)

RESERVE 2 QG

où

X est un pont alkylène, cycloalkylène ou phénylène, qui peut contenir éventuellement les hétéroatomes,

R représente hydrogène ou alkyle et

A représente un système cyclique aromatique, cycloaliphatique ou hétérocyclique.

3. Matières à mouler selon la revendication 1, caractérisées par le fait que l'on utilise, comme peroxydes G, benzoylperoxyde, tert.-butylperoctoate, tert.-butylperbenzoate, dicumylperoxyde, di-tert.-butylperoxyde, percétales ou percarbonates.